# FASCICULE DE BREVET EUROPEEN

(11) **EP 4 129 828 B1**
(45) Date de publication et mention de la délivrance du brevet: **31.12.2025**
(21) Numéro de dépôt: 22183709.9
(22) Date de dépôt: 08.07.2022
(51) Int. Cl.: B64D 37/34

(54) **AÉRONEF COMPRENANT UN DISPOSITIF D ALIMENTATION EN HYDROGÈNE INTÉGRANT UN SYSTÈME DE CHAUFFAGE DE L HYDROGÈNE POSITIONNÉ DANS LE FUSELAGE DE L AÉRONEF**
FLUGZEUG MIT EINEM WASSERSTOFFVERSORGUNGSGERÄT, IN DAS EIN WASSERSTOFFHEIZSYSTEM INTEGRIERT IST, DAS IM RUMPF DES FLUGZEUGS POSITIONIERT IST
AIRCRAFT COMPRISING A HYDROGEN SUPPLY DEVICE INTEGRATING A HYDROGEN HEATING SYSTEM POSITIONED IN THE FUSELAGE OF THE AIRCRAFT

(30) Priorité: 03.08.2021 FR 2108416
(43) Date de publication de la demande: 08.02.2023
(73) Titulaire: Airbus SAS, 31700 Blagnac (FR); AIRBUS OPERATIONS (S.A.S.), 31060 Toulouse (FR)
(72) Inventeur: CZAPLA, Lionel, 31060 TOULOUSE (FR); ABELE, Antoine, 31060 TOULOUSE (FR); THUBERT, Benjamin, 31060 TOULOUSE (FR); PISSAVIN, Alexis, 31700 BLAGNAC (FR); VERMA, Abhishek, 31060 TOULOUSE (FR); FORBES, Alistair, 31060 TOULOUSE (FR); CARRETERO BENIGNOS, Jorge A., 82024 TAUFKIRCHEN (DE); BAMMER, Benedikt, 86609 DONAUWÖRTH (DE)
(74) Mandataire: Fantin, Laurent

(56) Documents cités:
- EP-A1- 2 644 508
- US-A1- 2008 006 743

## Description

La présente demande se rapporte à un aéronef comprenant un dispositif d'alimentation en hydrogène intégrant un système de chauffage de l'hydrogène positionné dans le fuselage de l'aéronef.

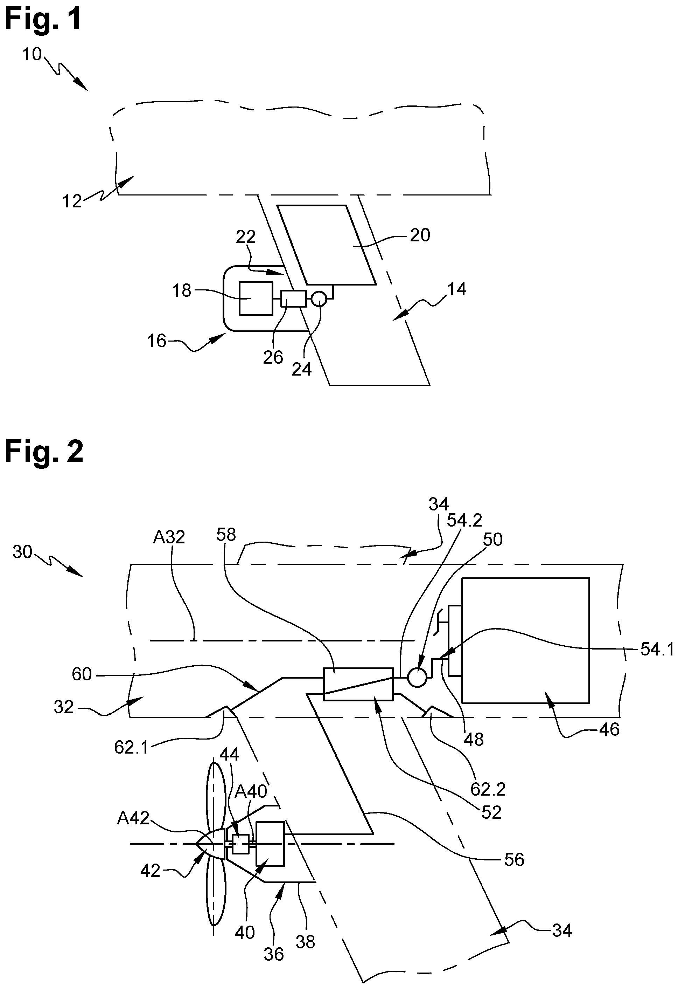

Selon un mode de réalisation visible sur la figure 1, un aéronef 10 comprend un fuselage 12, une voilure 14 ainsi que plusieurs ensembles propulseurs 16 positionnés de part et d'autre du fuselage, reliés à la voilure 14 et comportant chacun une turbomachine 18.

Dans le cas d'un aéronef fonctionnant avec un carburant à base d'hydrocarbure, l'aéronef 10 comprend des réservoirs de carburant 20 intégrés dans la voilure 14 ainsi qu'un dispositif d'alimentation en carburant 22 reliant chaque turbomachine 18 à un réservoir de carburant 20. Selon une configuration, le dispositif d'alimentation en carburant comprend au moins une pompe 24 ainsi qu'au moins un échangeur thermique 26 pour préchauffer le carburant. Cet échangeur thermique 26 qui utilise au moins une source de chaleur de la turbomachine 18 est positionné au niveau de l'ensemble propulseur 16.

Dans le cas d'un aéronef fonctionnant à l'hydrogène, ce dernier comprend au moins un réservoir de carburant positionné dans le fuselage et configuré pour stocker l'hydrogène à l'état liquide et cryogénique. L'aéronef comprend également un dispositif d'alimentation en hydrogène reliant chaque turbomachine à un réservoir de carburant et comportant une pompe haute pression ainsi qu'un échangeur thermique. Dans la mesure où l'énergie nécessaire pour comprimer l'hydrogène est moindre lorsqu'il est à l'état liquide, la pompe à haute pression est positionnée en sortie du réservoir de carburant. Les sources de chaleur étant essentiellement produites par les turbomachines, les échangeurs thermiques sont positionnés à proximité des turbomachines dans les ensembles propulseurs. En complément, le dispositif d'alimentation en hydrogène comprend des conduits pour canaliser l'hydrogène à haute pression, à l'état liquide et cryogénique, de la pompe haute pression positionnée dans le fuselage jusqu'à l'échangeur thermique positionné dans l'un des ensembles propulseurs. Compte tenu de l'état liquide et cryogénique, les conduits sont des conduits à double peau complexes et isolés thermiquement, la zone entre les deux peaux étant inertée ou mise au vide.

L'utilisation de conduits à double peau complexes combinée à la distance importante séparant la pompe à haute pression et l'échangeur thermique induit des coûts élevés et augmente significativement la masse embarquée. Ces conduits à double peau étant courts, il est nécessaire de prévoir de nombreux raccords qui augmentent encore plus les coûts et la masse embarquée.

Il est connu du document US2008/006743 un aéronef à haute altitude de vol et à longue endurance alimenté en hydrogène, et comprenant un réservoir de fluide cryogénique agencé dans le fuselage de l'aéronef, le système de propulsion de l'aéronef étant agencé sur le fuselage ou sur l'aile de l'aéronef.

Il est connu du document EP2644508 un aéronef comprenant un système de refroidissement d'un composant électrique qui permet de dissiper la chaleur dudit composant électrique et de réchauffer le gaz naturel liquide alimentant les moteurs de l'aéronef.

La présente invention vise à remédier à tout ou partie des inconvénients de l'art antérieur.

A cet effet, l'invention a pour objet un aéronef comprenant un fuselage, une voilure, au moins un ensemble propulseur relié à la voilure et écarté du fuselage, au moins une turbomachine fonctionnant à l'hydrogène et générant une poussée au niveau de l'ensemble propulseur, au moins un réservoir de carburant positionné dans le fuselage, configuré pour stocker de l'hydrogène à l'état liquide et cryogénique ainsi qu'au moins un dispositif d'alimentation en hydrogène reliant la turbomachine et le réservoir de carburant, ce dispositif d'alimentation en hydrogène comportant au moins une pompe reliée au réservoir de carburant et positionnée dans le fuselage à proximité du réservoir de carburant ainsi qu'au moins un système de chauffage de l'hydrogène positionné en amont de la turbomachine.

Selon l'invention, le système de chauffage de l'hydrogène est positionné dans le fuselage à proximité de la pompe ou au niveau d'une zone de jonction reliant le fuselage et la voilure. Cette solution permet de réduire la longueur des conduits à double peau complexes, configurés pour canaliser l'hydrogène à l'état cryogénique entre le réservoir de carburant, la pompe et le système de chauffage de l'hydrogène.

Selon une autre caractéristique, le système de chauffage de l'hydrogène est séparé du réservoir de carburant d'une distance inférieure à 5 m.

Selon une autre caractéristique, le système de chauffage de l'hydrogène comprend au moins un échangeur thermique, au moins un système de chauffage électrique et/ou au moins un système de chauffage par catalyse.

Selon une autre caractéristique, le système de chauffage de l'hydrogène comprend au moins un échangeur thermique traversé par une veine d'air captée à l'extérieur de l'aéronef.

Selon une autre caractéristique, le système de chauffage de l'hydrogène comprend au moins un échangeur thermique configuré pour échanger des calories entre l'hydrogène et un fluide caloporteur provenant d'au moins une source présente dans l'aéronef.

Selon une autre caractéristique, le système de chauffage de l'hydrogène comprend au moins un échangeur thermique principal configuré pour échanger des calories entre l'hydrogène et un fluide caloporteur intermédiaire traversant au moins un échangeur thermique secondaire. Selon une autre caractéristique, le système de chauffage de l'hydrogène comprend au moins deux échangeurs thermiques principaux agencés en série et configurés pour échanger des calories entre l'hydrogène et un même fluide caloporteur intermédiaire traversant au moins un échangeur thermique secondaire.

Selon une autre caractéristique, le système de chauffage de l'hydrogène comprend un circuit de retour configuré pour prélever une partie de l'hydrogène réchauffé en sortie du système de chauffage de l'hydrogène et pour le réintroduire en entrée du système de chauffage de l'hydrogène.

Selon d'autres caractéristiques, l'ensemble propulseur comprend une hélice multipale et la turbomachine est positionnée au niveau d'une zone de jonction reliant le fuselage et la voilure, l'aéronef comprenant une chaîne de transmission mécanique reliant la turbomachine et l'hélice multipale.

Selon une autre caractéristique, la turbomachine comprend un rotor qui présente un axe de rotation et elle est positionnée de sorte que cet axe de rotation soit parallèle à un axe longitudinal du fuselage.

Selon une autre caractéristique, le dispositif d'alimentation en hydrogène comprend un premier conduit à double peau reliant le réservoir de carburant et la pompe ainsi qu'un deuxième conduit à double peau reliant la pompe et le système de chauffage de l'hydrogène. Selon une autre caractéristique, le dispositif d'alimentation en hydrogène comprend un troisième conduit à double peau reliant le système de chauffage de l'hydrogène et la turbomachine.

Selon une autre caractéristique, ledit aéronef comprend des ensembles propulseurs disposés de part et d'autre du fuselage et reliés à la voilure, chaque ensemble propulseur étant écarté du fuselage et comprenant une turbomachine, ledit aéronef comprenant un réservoir de carburant commun auxdites turbomachines et un dispositif d'alimentation en hydrogène pour chaque turbomachine.

D'autres caractéristiques et avantages ressortiront de la description de l'invention qui va suivre, description donnée à titre d'exemple uniquement, en regard des dessins annexés parmi lesquels :
- La figure 1 est une représentation schématique d'une partie d'un aéronef comprenant un dispositif d'alimentation en carburant illustrant un mode de réalisation de l'art antérieur,
- La figure 2 est une représentation schématique d'une partie d'un aéronef comprenant un dispositif d'alimentation en hydrogène illustrant un mode de réalisation de l'invention,
- La figure 3 est une représentation schématique d'un échangeur thermique d'un dispositif d'alimentation en hydrogène illustrant un mode de réalisation de l'invention,
- La figure 4 est une représentation schématique d'un échangeur thermique d'un dispositif d'alimentation en hydrogène illustrant un autre mode de réalisation de l'invention,
- La figure 5 est une représentation schématique d'un échangeur thermique d'un dispositif d'alimentation en hydrogène illustrant un autre mode de réalisation de l'invention,
- La figure 6 est une représentation schématique d'un échangeur thermique d'un dispositif d'alimentation en hydrogène illustrant un autre mode de réalisation de l'invention,
- La figure 7 est une représentation schématique d'un échangeur thermique d'un dispositif d'alimentation en hydrogène illustrant un autre mode de réalisation de l'invention,
- La figure 8 est une représentation schématique d'un échangeur thermique d'un dispositif d'alimentation en hydrogène illustrant un autre mode de réalisation de l'invention,
- La figure 9 est une représentation schématique d'une partie d'un aéronef comprenant un dispositif d'alimentation en hydrogène et une turbomachine déportée illustrant un mode de réalisation de l'invention, et
- La figure 10 est une vue en perspective d'une partie d'un aéronef montrant par transparence une turbomachine déportée illustrant un mode de réalisation de l'invention.

Selon un mode de réalisation visible sur les figures 2, 9 et 10, un aéronef 30 comprend un fuselage 32, une voilure 34 ainsi que des ensembles propulseurs 36 disposés de part et d'autre du fuselage 32 et reliés à la voilure 34. Au niveau de la voilure 34, le fuselage 32 est approximativement cylindrique et présente un axe longitudinal A32 parallèle à la paroi extérieure du fuselage 32.

Selon une configuration, les ensembles propulseurs 36 sont positionnés sous la voilure 34. Ils sont écartés du fuselage 32. Autrement dit, les ensembles propulseurs 36 sont positionnés à distance du fuselage 32, c'est-à-dire qu'un espace est présent entre chaque ensemble propulseur 36 et le fuselage 32.

Selon un mode de réalisation visible sur la figure 2, chaque ensemble propulseur 36 comprend une nacelle 38, une turbomachine 40 positionnée dans la nacelle 38 et présentant un arbre de sortie A40, une hélice multipale 42 positionnée à l'extérieur de la nacelle 38 et présentant un arbre de rotation A42 accouplé à l'arbre de sortie A40 de la turbomachine 40. Selon une configuration, l'ensemble propulseur 36 comprend un réducteur 44 positionné dans la nacelle 38 et reliant l'arbre de rotation A42 de l'hélice multipale 42 et l'arbre de sortie A40 de la turbomachine 40.

La turbomachine 40 fonctionnant à l'hydrogène, l'aéronef 30 comprend au moins un réservoir de carburant 46 positionné dans le fuselage 32 et configuré pour stocker de l'hydrogène à l'état liquide et cryogénique ainsi qu'un dispositif d'alimentation en hydrogène reliant la turbomachine 40 et le réservoir de carburant 46.

Le réservoir de carburant 46 présente au moins une sortie 48. Pour donner un ordre de grandeur, l'hydrogène présente une pression de l'ordre de 3 bars et une température de l'ordre de -243°C au niveau de la sortie 48 du réservoir de carburant 46.

Selon une configuration, l'aéronef 30 comprend un réservoir de carburant commun à plusieurs turbomachines 40 et un dispositif d'alimentation en hydrogène pour chaque turbomachine 40. Bien entendu, l'invention n'est pas limitée à cette configuration.

Le dispositif d'alimentation en hydrogène comprend au moins une pompe 50 reliée à la sortie 48 du réservoir de carburant 46 ainsi qu'au moins un système de chauffage de l'hydrogène 52 en amont de la turbomachine 40.

Selon un mode de réalisation, la pompe 50 est une pompe à haute pression. Selon un agencement, la pompe 50 est positionnée dans le fuselage 32, à proximité de la sortie 48 du réservoir de carburant 46. La pompe 50 est positionnée à une faible distance de la sortie 48 du réservoir de carburant 46, selon l'invention à une distance inférieure ou égale à 5 m.

L'hydrogène étant à l'état liquide au moment de sa compression, cet agencement permet de réduire l'énergie nécessaire pour comprimer l'hydrogène. Pour donner un ordre de grandeur, l'hydrogène à l'état liquide et cryogénique présente une pression de l'ordre de 50 bars à la sortie de la pompe 50.

Selon une particularité de l'invention, le système de chauffage de l'hydrogène 52 est positionné dans le fuselage 32, à proximité de la pompe 50, à une faible distance du réservoir de carburant 46. Par faible distance, on entend que le système de chauffage de l'hydrogène 52 est séparé du réservoir de carburant 46 d'une distance inférieure à 5 m. Le système de chauffage de l'hydrogène 52 est de préférence séparé du réservoir de carburant 46 d'une distance inférieure à 5 m, mais pourrait bien entendu être séparé du réservoir de carburant 46 d'une distance supérieure à 5 m.

Selon une autre particularité de l'invention, le système de chauffage de l'hydrogène 52 est positionné au niveau d'une zone de jonction 72 reliant le fuselage 32 et la voilure 34, c'est-à-dire à une interface entre le fuselage 32 et la voilure 34 (« Wing box » en anglais), à proximité de la pompe 50, à une faible distance du réservoir de carburant 46.

Le système de chauffage de l'hydrogène 52 est configuré pour que la température de l'hydrogène à sa sortie soit à une température optimale pour la turbomachine 40. Ainsi, en sortie du système de chauffage de l'hydrogène 52, l'hydrogène est à l'état gazeux et n'est plus à l'état cryogénique. Pour donner un ordre de grandeur, l'hydrogène présente une température de l'ordre de 27°C en sortie du système de chauffage de l'hydrogène 52.

Le dispositif d'alimentation en hydrogène comprend un premier conduit à double peau 54.1 reliant le réservoir de carburant 46 et la pompe 50 ainsi qu'un deuxième conduit à double peau 54.2 reliant la pompe 50 et le système de chauffage de l'hydrogène 52. Ces premier et deuxième conduits à double peau 54.1, 54.2 sont configurés pour canaliser de l'hydrogène à l'état liquide et cryogénique. La longueur cumulée des premier et deuxième conduits à double peau 54.1, 54.2 est réduite et nettement inférieure par rapport à celle de l'art antérieur, ce qui limite l'augmentation de la masse embarquée.

Le dispositif d'alimentation en hydrogène comprend un troisième conduit 56 reliant le système de chauffage de l'hydrogène 52 et la turbomachine 40 et configuré pour canaliser de l'hydrogène à l'état gazeux. Le troisième conduit 56 est un conduit à double peau, différent des premier et deuxième conduits à double peau 54.1, 54.2, plus simple qui présente une masse linéaire nettement inférieure à celle des premier et deuxième conduits à double peau 54.1, 54.2. De plus, ce troisième conduit 56 ne canalisant pas un fluide à l'état cryogénique, les risques de givre des structures de l'aéronef le supportant sont faibles.

Le dispositif d'alimentation en hydrogène peut comprendre une combinaison de différents systèmes de chauffage de l'hydrogène 52.

Selon une autre mode de réalisation, le système de chauffage de l'hydrogène 52 comprend au moins un échangeur thermique 58.

Selon un mode de réalisation visible sur la figure 2, le système de chauffage de l'hydrogène comprend au moins un échangeur thermique 58 traversé par une veine d'air captée à l'extérieur de l'aéronef. La veine d'air est canalisée dans un conduit 60 reliant une entrée d'air 62.1 configurée pour prélever l'air à l'extérieur du fuselage 32 et une sortie d'air 62.2 configurée pour éjecter l'air à l'extérieur du fuselage 32.

Selon un autre mode de réalisation, le système de chauffage de l'hydrogène 52 comprend au moins un échangeur thermique 58 configuré pour échanger des calories entre l'hydrogène et un gaz caloporteur provenant d'au moins une source présente dans l'aéronef, comme de l'air chaud provenant d'une turbomachine 40 ou d'un groupe auxiliaire de puissance (dit APU pour Auxiliary Power Unit en anglais) et utilisé entre autres pour la climatisation de la cabine de l'aéronef.

Selon un autre mode de réalisation, le système de chauffage de l'hydrogène 52 comprend au moins un échangeur thermique 58 configuré pour échanger des calories entre l'hydrogène et un liquide caloporteur provenant d'au moins une source présente dans l'aéronef, comme de l'huile provenant d'une turbomachine 40 ou d'un groupe auxiliaire de puissance.

Selon un autre mode de réalisation, le système de chauffage de l'hydrogène 52 comprend au moins un échangeur thermique 58 configuré pour échanger des calories entre l'hydrogène et un fluide caloporteur intermédiaire provenant d'au moins un autre échangeur thermique configuré pour échanger des calories entre le fluide caloporteur intermédiaire et un fluide caloporteur provenant d'au moins une source présente dans l'aéronef, comme de l'air chaud ou de l'huile provenant d'une turbomachine 40 ou d'un groupe auxiliaire de puissance.

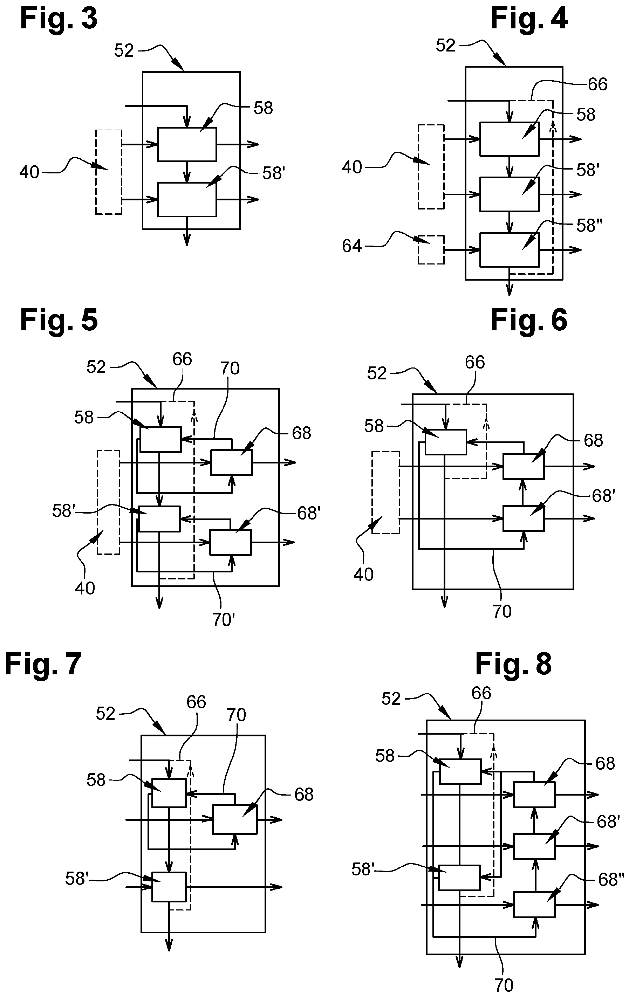

Comme illustré sur les figures 3 à 8, le système de chauffage de l'hydrogène 52 comprend une combinaison de plusieurs échangeurs thermiques.

Selon un mode de réalisation visible sur la figure 3, le système de chauffage de l'hydrogène 52 comprend des premier et deuxième échangeurs thermiques 58, 58' en série, le premier échangeur thermique 58 étant configuré pour échanger des calories entre l'hydrogène et un fluide caloporteur, comme de l'huile par exemple, provenant d'une turbomachine 40 ou d'un groupe auxiliaire de puissance, le deuxième échangeur thermique 58' étant configuré pour échanger des calories entre l'hydrogène et un fluide caloporteur, comme de l'air chaud par exemple, provenant d'une turbomachine 40 ou d'un groupe auxiliaire de puissance. Selon ce mode de réalisation, le système de chauffage de l'hydrogène 52 peut comprendre un circuit de retour configuré pour prélever une partie de l'hydrogène réchauffé en sortie du système de chauffage de l'hydrogène 52 et pour le réintroduire en entrée de ce dernier.

Selon un deuxième mode de réalisation visible sur la figure 4, le système de chauffage de l'hydrogène 52 comprend trois échangeurs thermiques 58, 58', 58" en série, un premier échangeur thermique 58 configuré pour échanger des calories entre l'hydrogène et un fluide caloporteur, comme de l'huile par exemple, provenant d'une turbomachine 40 ou d'un groupe auxiliaire de puissance, un deuxième échangeur thermique 58' configuré pour échanger des calories entre l'hydrogène et un fluide caloporteur, comme de l'air chaud par exemple, provenant d'une turbomachine 40 ou d'un groupe auxiliaire de puissance, un troisième échangeur thermique 58" configuré pour échanger des calories entre l'hydrogène et un fluide caloporteur provenant d'une autre source de chaleur 64 de l'aéronef. Selon ce mode de réalisation, le système de chauffage de l'hydrogène 52 comprend un circuit de retour 66 configuré pour prélever une partie de l'hydrogène réchauffé en sortie du système de chauffage de l'hydrogène 52 et pour le réintroduire en entrée de ce dernier.

Bien entendu, l'invention n'est pas limitée à trois échangeurs thermiques en série.

Selon un mode de réalisation visible sur la figure 5, le système de chauffage de l'hydrogène 52 comprend des premier et deuxième échangeurs thermiques principaux 58, 58' en série ainsi que des premier et deuxième échangeurs thermiques secondaires 68, 68'. Le premier échangeur thermique principal 58 est configuré pour échanger des calories entre l'hydrogène et un premier fluide caloporteur intermédiaire 70 provenant du premier échangeur thermique secondaire 68 configuré pour échanger des calories entre le premier fluide caloporteur intermédiaire 70 et un fluide caloporteur, comme de l'huile par exemple, provenant d'une turbomachine 40 ou d'un groupe auxiliaire de puissance. Le deuxième échangeur thermique principal 58' étant configuré pour échanger des calories entre l'hydrogène et un deuxième fluide caloporteur intermédiaire 70' provenant du deuxième échangeur thermique secondaire 68' configuré pour échanger des calories entre le deuxième fluide caloporteur intermédiaire 70' et un fluide caloporteur, comme de l'air chaud, provenant d'une turbomachine 40 ou d'un groupe auxiliaire de puissance. Selon une configuration, le système de chauffage de l'hydrogène comprend un circuit de retour 66 configuré pour prélever une partie de l'hydrogène réchauffé en sortie du système de chauffage de l'hydrogène 52 et pour le réintroduire en entrée de ce dernier. En variante, le système de chauffage de l'hydrogène 52 peut comprendre trois ou plus échangeurs thermiques principaux en série accouplés chacun avec un échangeur thermique secondaire. Selon cette variante, un troisième échangeur thermique principal est configuré pour échanger des calories entre l'hydrogène et un troisième fluide caloporteur intermédiaire provenant d'un troisième échangeur thermique secondaire configuré pour échanger des calories entre le troisième fluide caloporteur intermédiaire et un fluide caloporteur provenant d'une autre source de chaleur de l'aéronef. Selon un mode de réalisation visible sur la figure 6, le système de chauffage de l'hydrogène 52 comprend un échangeur thermique principal 58 ainsi que des premier et deuxième échangeurs thermiques secondaires 68, 68' en série. L'échangeur thermique principal 58 est configuré pour échanger des calories entre l'hydrogène et un fluide caloporteur intermédiaire 70 traversant les premier et deuxième échangeurs thermiques secondaires 68, 68'. Le premier échangeur thermique secondaire 68 est configuré pour échanger des calories entre le fluide caloporteur intermédiaire 70 et un fluide caloporteur, comme de l'huile par exemple, provenant d'une turbomachine 40 ou d'un groupe auxiliaire de puissance. Le deuxième échangeur thermique secondaire 68' est configuré pour échanger des calories entre le fluide caloporteur intermédiaire 70 et un fluide caloporteur, comme de l'air chaud par exemple, provenant d'une turbomachine 40 ou d'un groupe auxiliaire de puissance. Selon une configuration, le système de chauffage de l'hydrogène 52 comprend un circuit de retour 66 configuré pour prélever une partie de l'hydrogène réchauffé en sortie de l'échangeur thermique principal 58 et pour le réintroduire en amont de ce dernier.

En variante, le système de chauffage de l'hydrogène 52 peut comprendre trois échangeurs thermiques secondaires en série traversés par un fluide caloporteur intermédiaire 70 traversant l'échangeur thermique principal 58. Selon cette variante, un troisième échangeur thermique secondaire 68 est configuré pour échanger des calories entre le fluide caloporteur intermédiaire et un fluide caloporteur provenant d'une autre source de chaleur de l'aéronef. Selon un mode de réalisation visible sur la figure 7, le système de chauffage de l'hydrogène 52 comprend un premier échangeur thermique 58 configuré pour échanger des calories entre l'hydrogène et un fluide caloporteur intermédiaire 70 provenant d'un échangeur thermique secondaire 68 ainsi qu'un deuxième échangeur thermique 58' configuré pour échanger des calories entre l'hydrogène et un fluide caloporteur, comme de l'air chaud par exemple, provenant d'une turbomachine 40 ou d'un groupe auxiliaire de puissance, les premier et deuxième échangeurs thermiques 58, 58' étant agencés en série. L'échangeur thermique secondaire 68 est configuré pour échanger des calories entre le fluide caloporteur intermédiaire 70 et un fluide caloporteur, comme de l'huile par exemple, provenant d'une turbomachine 40 ou d'un groupe auxiliaire de puissance. Selon une configuration, le système de chauffage de l'hydrogène 52 comprend un circuit de retour 66 configuré pour prélever une partie de l'hydrogène réchauffé en sortie du système de chauffage de l'hydrogène 52 et pour le réintroduire en entrée de ce dernier.

Selon un mode de réalisation visible sur la figure 8, le système de chauffage de l'hydrogène 52 comprend au moins deux échangeurs thermiques principaux 58, 58' agencés en série et configurés pour échanger des calories entre l'hydrogène et un même fluide caloporteur intermédiaire 70 traversant au moins un échangeur thermique secondaire 68. Selon une configuration, le système de chauffage de l'hydrogène 52 comprend des premier, deuxième et troisième échangeurs thermiques secondaires 68, 68', 68" agencés en série et traversés par le fluide caloporteur intermédiaire70 qui traverse en parallèle les premier et deuxième échangeurs thermiques principaux 58, 58'. Le premier échangeur thermique secondaire 68 est configuré pour échanger des calories entre le fluide caloporteur intermédiaire 70 et un fluide caloporteur, comme de l'huile par exemple, provenant d'une turbomachine 40 ou d'un groupe auxiliaire de puissance. Le deuxième échangeur thermique secondaire 68' est configuré pour échanger des calories entre le fluide caloporteur intermédiaire 70 et un fluide caloporteur, comme de l'air chaud par exemple, provenant d'une turbomachine 40 ou d'un groupe auxiliaire de puissance. Le troisième échangeur thermique secondaire 68" est configuré pour échanger des calories entre le fluide caloporteur intermédiaire 70 et un fluide caloporteur provenant d'une autre source de chaleur 64 de l'aéronef.

Le ou les échangeurs thermiques secondaires peuvent être agencés dans la nacelle 38.

Bien entendu, l'invention n'est pas limitée à ces combinaisons pour les échangeurs thermiques.

Selon un autre mode de réalisation, le système de chauffage de l'hydrogène 52 est un système de chauffage électrique comportant au moins une résistance électrique alimentée par une source électrique, par exemple une batterie électrique ou toute autre source électrique de l'aéronef.

Selon un autre mode de réalisation, le système de chauffage de l'hydrogène 52 est un système de chauffage par catalyse consommant par exemple de l'hydrogène pour produire de la chaleur.

Bien entendu, l'invention n'est pas limitée à ces modes de réalisation pour le système de chauffage de l'hydrogène 52. Ainsi, le système de chauffage de l'hydrogène 52 comprend au moins un échangeur thermique, au moins un système de chauffage électrique et/ou au moins un système de chauffage par catalyse.

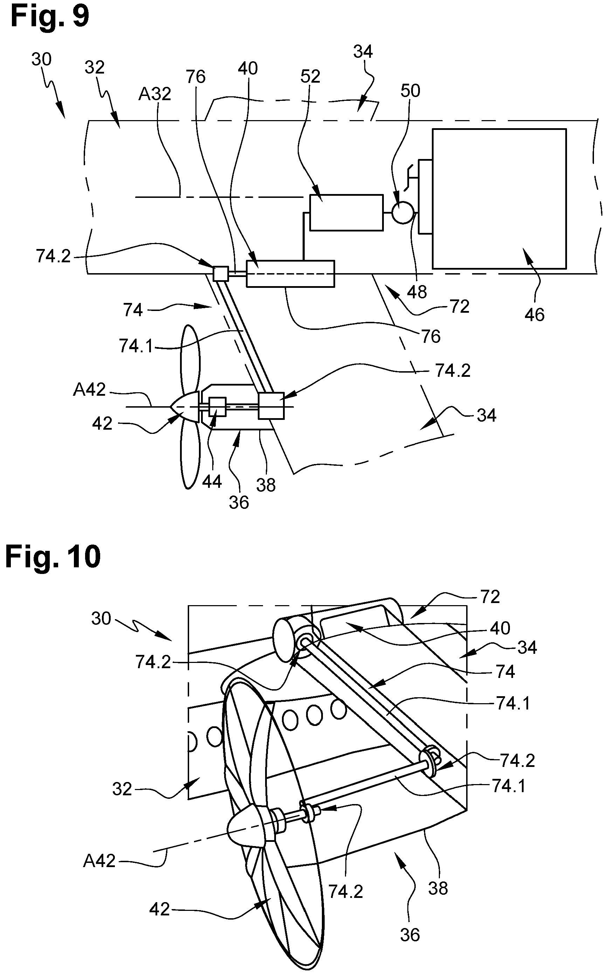

Selon un mode de réalisation illustré sur les figures 9 et 10, la turbomachine 40 n'est pas positionnée dans la nacelle 38. La turbomachine 40 est positionnée au plus près du fuselage 32, au niveau d'une zone de jonction 72 reliant le fuselage 32 et la voilure 34. Selon les cas, la turbomachine 40 est positionnée sous, dans ou sur la voilure 34.

Selon une configuration, toutes les turbomachines 40 accouplées à une hélice multipale 42 sont positionnées de part et d'autre du fuselage 32 dans les zones de jonction 72 reliant le fuselage 32 et la voilure 34.

Pour chaque turbomachine 40 positionnée au niveau de la zone de jonction 72 reliant le fuselage 32 et la voilure 34 et accouplée à une hélice multipale 42, l'aéronef comprend une chaîne de transmission mécanique 74 reliant la turbomachine 40 et l'hélice multipale 42 et plus particulièrement le réducteur 44 accouplé à l'hélice multipale 42.

Selon une configuration, chaque chaîne de transmission mécanique 74 comprend au moins un arbre de transmission 74.1 ainsi qu'un mécanisme d'accouplement 74.2 prévu à chaque extrémité de chaque arbre de transmission 74.1.

Le fait de positionner la turbomachine 40 ou au moins une turbomachine 40 dans la zone de jonction 72 reliant le fuselage 32 et la voilure 34 permet de réduire les dimensions de la nacelle 38, et plus particulièrement sa section transversale (perpendiculaire à l'arbre de rotation A42 de l'hélice multipale 42), ce qui contribue à améliorer les performances aérodynamiques de l'aéronef.

Selon un autre avantage, cela permet de réduire la longueur des conduits à double peau à son strict minimum, ce qui contribue à réduire les risques de fuite d'hydrogène et à ne pas trop augmenter la masse embarquée.

Selon une configuration, la turbomachine 40 ou au moins une turbomachine 40 comprend un rotor qui présente un axe de rotation 76 et elle est positionnée de sorte que cet axe de rotation 76 soit parallèle à l'axe longitudinal A32 du fuselage 32. Cette configuration permet d'élargir le champ des possibilités pour le positionnement des réservoirs de carburant 46. Cependant, l'invention n'est pas limitée à cette configuration, la turbomachine 40 pouvant être positionnée de manière à ce que l'axe de rotation 76 de son rotor soit perpendiculaire ou incliné par rapport à l'axe longitudinal A32 du fuselage 32.

L'invention n'est pas limitée aux modes de réalisation précédemment décrits. Quel que soit le mode de réalisation, l'aéronef comprend au moins une turbomachine 40 générant une poussée au niveau d'un ensemble propulseur. Selon certains modes de réalisation, la turbomachine 40 génère directement la poussée et elle est positionnée dans l'ensemble propulseur. Selon d'autres modes de réalisation, la turbomachine 40 est accouplée à une hélice multipale intégrée dans l'ensemble propulseur et la turbomachine est positionnée dans l'ensemble propulseur ou espacée de ce dernier.

## Revendications

1. Aéronef comprenant un fuselage (32), une voilure (34), au moins un ensemble propulseur (36) relié à la voilure (34) et écarté du fuselage (32), au moins une turbomachine (40) fonctionnant à l'hydrogène et générant une poussée au niveau de l'ensemble propulseur (36), au moins un réservoir de carburant (46) présentant au moins une sortie (48), positionné dans le fuselage (32) et configuré pour stocker de l'hydrogène à l'état liquide et cryogénique ainsi qu'au moins un dispositif d'alimentation en hydrogène reliant la turbomachine (40) et le réservoir de carburant (46), ce dispositif d'alimentation en hydrogène comportant au moins une pompe (50) reliée au réservoir de carburant (46) ainsi qu'au moins un système de chauffage de l'hydrogène (52) positionné en amont de la turbomachine (40), le système de chauffage de l'hydrogène (52) comprenant au moins un échangeur thermique, ledit système de chauffage de l'hydrogène (52) étant positionné dans le fuselage (32) ou au niveau d'une zone de jonction (72) reliant le fuselage (32) et la voilure (34), **caractérisé en ce que** ladite pompe est positionnée dans le fuselage (32) à une distance inférieure ou égale à cinq mètres de la sortie (48) du réservoir de carburant (46), **en ce que** le système de chauffage de l'hydrogène (52) comprend au moins un système de chauffage électrique et/ou au moins un système de chauffage par catalyse, et est séparé du réservoir de carburant (46) d'une distance inférieure à cinq mètres, et **en ce que** le système de chauffage de l'hydrogène (52) comprend un circuit de retour (66) configuré pour prélever une partie de l'hydrogène réchauffé en sortie du système de chauffage de l'hydrogène (52) et pour le réintroduire en entrée du système de chauffage de l'hydrogène (52).

2. Aéronef selon la revendication précédente, **caractérisé en ce que** le système de chauffage de l'hydrogène (52) comprend au moins un échangeur thermique (58) traversé par une veine d'air captée à l'extérieur de l'aéronef.

3. Aéronef selon l'une des revendications précédentes, **caractérisé en ce que** le système de chauffage de l'hydrogène (52) comprend au moins un échangeur thermique (58) configuré pour échanger des calories entre l'hydrogène et un fluide caloporteur provenant d'au moins une source présente dans l'aéronef.

4. Aéronef selon l'une des revendications précédentes, **caractérisé en ce que** le système de chauffage de l'hydrogène (52) comprend au moins un échangeur thermique principal (58) configuré pour échanger des calories entre l'hydrogène et un fluide caloporteur intermédiaire (70) traversant au moins un échangeur thermique secondaire (68, 68', 68").

5. Aéronef selon l'une des revendications précédentes, **caractérisé en ce que** le système de chauffage de l'hydrogène (52) comprend au moins deux échangeurs thermiques principaux (58, 58') agencés en série et configurés pour échanger des calories entre l'hydrogène et un même fluide caloporteur intermédiaire (70) traversant au moins un échangeur thermique secondaire (68).

6. Aéronef selon l'une des revendications précédentes, **caractérisé en ce que** l'ensemble propulseur (36) comprend une hélice multipale (42), **en ce que** la turbomachine (40) est positionnée au niveau d'une zone de jonction (72) reliant le fuselage (32) et la voilure (34) et **en ce que** l'aéronef comprend une chaîne de transmission mécanique (74) reliant la turbomachine (40) et l'hélice multipale (42).

7. Aéronef selon la revendication précédente, **caractérisé en ce que** la turbomachine (40) comprend un rotor qui présente un axe de rotation (76) et **en ce que** la turbomachine (40) est positionnée de sorte que cet axe de rotation (76) soit parallèle à un axe longitudinal (A32) du fuselage (32).

8. Aéronef selon l'une des revendications précédentes, **caractérisé en ce que** le dispositif d'alimentation en hydrogène comprend un premier conduit à double peau (54.1) reliant le réservoir de carburant (46) et la pompe (50) et un deuxième conduit à double peau (54.2) reliant la pompe (50) et le système de chauffage de l'hydrogène (52).

9. Aéronef selon l'une des revendications précédentes, **caractérisé en ce que** le dispositif d'alimentation en hydrogène comprend un troisième conduit à double peau (56) reliant le système de chauffage de l'hydrogène (52) et la turbomachine (40).

10. Aéronef selon l'une des revendications précédentes, **caractérisé en ce que** ledit aéronef comprend des ensembles propulseurs (36) disposés de part et d'autre du fuselage (32) et reliés à la voilure (34), chaque ensemble propulseur (36) étant écarté du fuselage (32) et comprenant une turbomachine (40), ledit aéronef comprenant un réservoir de carburant (46) commun auxdites turbomachines (40) et un dispositif d'alimentation en hydrogène pour chaque turbomachine (40).

## Patentansprüche

1. Luftfahrzeug mit einem Rumpf (32), einem Flügel (34), wenigstens einer Triebwerkseinheit (36), die mit dem Flügel (34) verbunden und vom Rumpf (32) beabstandet ist, wenigstens einer Turbomaschine (40), die mit Wasserstoff betrieben wird und im Bereich der Triebwerkseinheit (36) Schub erzeugt, wenigstens einem Treibstofftank (46), der wenigstens einen Auslass (48) aufweist, der im Rumpf (32) angeordnet und so eingerichtet ist, dass er Wasserstoff in flüssigem und kryogenem Zustand speichert, sowie mit wenigstens einer Wasserstoffversorgungseinrichtung, die die Turbomaschine (40) und den Treibstofftank (46) verbindet, wobei diese Wasserstoffversorgungseinrichtung wenigstens eine Pumpe (50) aufweist, die mit dem Treibstofftank (46) verbunden ist, sowie wenigstens ein Wasserstoffheizsystem (52), das stromaufwärts der Turbomaschine (40) angeordnet ist, wobei das Wasserstoffheizsystem (52) wenigstens einen Wärmetauscher aufweist und wobei das Wasserstoffheizsystem (52) im Rumpf (32) oder in einem Verbindungsbereich (72), der den Rumpf (32) und den Flügel (34) verbindet, angeordnet ist, **dadurch gekennzeichnet, dass** die Pumpe im Rumpf (32) in einem Abstand von fünf Metern oder weniger vom Auslass (48) des Treibstofftanks (46) angeordnet ist, dass das Wasserstoffheizsystem (52) wenigstens ein elektrisches Heizsystem und/oder wenigstens ein katalytisches Heizsystem aufweist, und vom Treibstofftank (46) durch einen Abstand von weniger als fünf Metern getrennt ist, und dass das Wasserstoffheizsystem (52) eine Rückführleitung (66) aufweist, die so eingerichtet ist, dass sie einen Teil des erwärmten Wasserstoffs am Auslass des Wasserstoffheizsystems (52) entnimmt und ihn wieder in den Einlass des Wasserstoffheizsystems (52) einführt.

2. Luftfahrzeug nach dem vorhergehenden Anspruch, **dadurch gekennzeichnet, dass** das Wasserstoffheizsystem (52) wenigstens einen Wärmetauscher (58) aufweist, der von einem Luftstrom durchströmt ist, der außerhalb des Luftfahrzeugs aufgenommen wurde.

3. Luftfahrzeug nach einem der vorhergehenden Ansprüche, **dadurch gekennzeichnet, dass** das Wasserstoffheizsystem (52) wenigstens einen Wärmetauscher (58) aufweist, der so eingerichtet ist, dass er Wärme zwischen dem Wasserstoff und einem Wärmeträgerfluid aus wenigstens einer im Luftfahrzeug vorhandenen Quelle austauscht.

4. Luftfahrzeug nach einem der vorhergehenden Ansprüche, **dadurch gekennzeichnet, dass** das Wasserstoffheizsystem (52) wenigstens einen Hauptwärmetauscher (58) aufweist, der so eingerichtet ist, dass er Wärme zwischen dem Wasserstoff und einem Zwischenwärmeträgerfluid (70) austauscht, das durch wenigstens einen Sekundärwärmetauscher (68, 68', 68") fließt.

5. Luftfahrzeug nach einem der vorhergehenden Ansprüche, **dadurch gekennzeichnet, dass** das Wasserstoffheizsystem (52) wenigstens zwei Hauptwärmetauscher (58, 58') aufweist, die in Reihe angeordnet und so eingerichtet sind, dass sie Wärme zwischen dem Wasserstoff und demselben Zwischenwärmeträgerfluid (70) austauschen, das durch wenigstens einen Sekundärwärmetauscher (68) fließt.

6. Luftfahrzeug nach einem der vorhergehenden Ansprüche, **dadurch gekennzeichnet, dass** die Triebwerkseinheit (36) einen Mehrblattpropeller (42) aufweist, dass die Turbomaschine (40) in einem Verbindungsbereich (72) angeordnet ist, der den Rumpf (32) und den Flügel (34) verbindet, und dass das Luftfahrzeug eine mechanische Übertragungskette (74) aufweist, die die Turbomaschine (40) und den Mehrblattpropeller (42) verbindet.

7. Luftfahrzeug nach dem vorhergehenden Anspruch, **dadurch gekennzeichnet, dass** die Turbomaschine (40) einen Rotor aufweist, der eine Drehachse (76) aufweist, und dass die Turbomaschine (40) so angeordnet ist, dass diese Drehachse (76) parallel zu einer Längsachse (A32) des Rumpfes (32) ist.

8. Luftfahrzeug nach einem der vorhergehenden Ansprüche, **dadurch gekennzeichnet, dass** die Wasserstoffversorgungseinrichtung eine erste doppelwandige Leitung (54.1) aufweist, die den Treibstofftank (46) und die Pumpe (50) verbindet, und eine zweite doppelwandige Leitung (54.2), die die Pumpe (50) und das Wasserstoffheizsystem (52) verbindet.

9. Luftfahrzeug nach einem der vorhergehenden Ansprüche, **dadurch gekennzeichnet, dass** die Wasserstoffversorgungseinrichtung eine dritte doppelwandige Leitung (56) aufweist, die das Wasserstoffheizsystem (52) und die Turbomaschine (40) verbindet.

10. Luftfahrzeug nach einem der vorhergehenden Ansprüche, **dadurch gekennzeichnet, dass** das Luftfahrzeug Triebwerkseinheiten (36) aufweist, die auf beiden Seiten des Rumpfes (32) angeordnet und mit dem Flügel (34) verbunden sind, wobei jede Triebwerkseinheit (36) vom Rumpf (32) beabstandet ist und eine Turbomaschine (40) aufweist und wobei das Luftfahrzeug einen gemeinsamen Treibstofftank (46) für die Turbomaschinen (40) und eine Wasserstoffversorgungseinrichtung für jede Turbomaschine (40) aufweist.

## Claims

1. Aircraft comprising a fuselage (32), a wing structure (34), at least one propulsion unit (36) connected to the wing structure (34) and distant from the fuselage (32), at least one turbomachine (40) running on hydrogen and generating thrust at the propulsion unit (36), at least one fuel tank (46) having at least one outlet (48), positioned in the fuselage (32) and configured to store hydrogen in the liquid and cryogenic state, and at least one hydrogen supply device connecting the turbomachine (40) and the fuel tank (46), this hydrogen supply device comprising at least one pump (50) connected to the fuel tank (46) as well as at least one hydrogen heating system (52) positioned upstream of the turbomachine (40), the hydrogen heating system (52) comprising and positioned in the fuselage (32) in the vicinity of the fuel tank (46), said hydrogen heating system (52) being positioned in the fuselage (32) or in the region of a junction (72) connecting the fuselage (32) and the wing structure (34), **characterized in that** said pump is positioned in the fuselage (32) at a distance of 5 m or less from the outlet (48) of the fuel tank (46), **in that** the hydrogen heating system (52) comprises at least an electrical heating system and/or at least a catalysis-heating system, and is separated from the fuel tank (46) by a distance less than 5 m, and **in that** the hydrogen heating system (52) comprises a return circuit (66) configured to tap off some of the heated hydrogen leaving the hydrogen heating system (52) and reintroduce it into the inlet of the hydrogen heating system (52).

2. Aircraft as claimed in the preceding claim, wherein the hydrogen heating system (52) comprises at least a heat exchanger (58) through which a stream of air bled from outside the aircraft passes.

3. Aircraft as claimed in one of the preceding claims, wherein the hydrogen heating system (52) comprises at least a heat exchanger (58) configured to exchange heat energy between the hydrogen and a heat-transfer fluid coming from at least a source present in the aircraft.

4. Aircraft as claimed in one of the preceding claims, wherein the hydrogen heating system (52) comprises at least a main heat exchanger (58) configured to exchange heat energy between the hydrogen and an intermediate heat-transfer fluid (70) passing through at least a secondary heat exchanger (68, 68', 68").

5. Aircraft as claimed in one of the preceding claims, wherein the hydrogen heating system (52) comprises at least two main heat exchangers (58, 58') arranged in series and configured to exchange heat energy between the hydrogen and the one same intermediate heat-transfer fluid (70) passing through at least one secondary heat exchanger (68).

6. Aircraft as claimed in one of the preceding claims, wherein the propulsion unit (36) comprises a multiblade propeller (42), wherein the turbomachine (40) is positioned in the region of a junction (72) connecting the fuselage (32) and the wing structure (34), and wherein the aircraft comprises a mechanical drivetrain (74) connecting the turbomachine (40) and the multiblade propeller (42).

7. Aircraft as claimed in the preceding claim, wherein the turbomachine (40) comprises a rotor which has an axis of rotation (76) and wherein the turbomachine (40) is positioned in such a way that this axis of rotation (76) is parallel to a longitudinal axis (A32) of the fuselage (32).

8. Aircraft as claimed in one of the preceding claims, wherein the hydrogen supply device comprises a first double-walled pipe (54.1) connecting the fuel tank (46) and the pump (50) and a second double-walled pipe (54.2) connecting the pump (50) and the hydrogen heating system (52).

9. Aircraft as claimed in one of the preceding claims, wherein the hydrogen supply device comprises a third double-walled pipe (56) connecting the hydrogen heating system (52) and the turbomachine (40).

10. Aircraft as claimed in one of the preceding claims, wherein said aircraft comprises propulsion units (36) positioned on each side of the fuselage (32) and connected to the wing structure (34), each propulsion unit (36) being distant from the fuselage (32) and comprising a turbomachine (40), said aircraft comprising a fuel tank (46) common to said turbomachines (40) and a hydrogen supply device for each turbomachine (40).
